# EUROPÄISCHE PATENTANMELDUNG

(11) **EP 0 599 045 A2**
(43) Veröffentlichungstag der Anmeldung: **01.06.1994**
(21) Anmeldenummer: 93116775.3
(22) Anmeldetag: 18.10.1993
(51) Int. Cl.: B60G 17/08, F16F 9/46

(54) **Regelbarer hydraulischer Schwingungsdämpfer**

(30) Priorität: 21.11.1992 DE 4239160
(71) Anmelder: August Bilstein GmbH & Co. KG, D-58256 Ennepetal (DE)
(72) Erfinder: Schmidt, Klaus, D-51467 Bergisch Gladbach (DE); Huang, Zhen, Dr.-Ing., D-42389 Wuppertal (DE)

(57) **Zusammenfassung**

Die Erfindung betrifft einen regelbaren hydraulischen Schwingungsdämpfer für Kraftfahrzeuge mit einem Dämpfungszylinder (2), einem an einer Kolbenstange (21) befestigten, mit druckabhängigem Drosselquerschnitten (26, 27) versehenen Dämpfungskolben (1), der den Dämpferzylinder (2) in einen ersten und einen zweiten Arbeitsraum (3, 4) unterteilt und mindestens einen Bypassdurchlaß (5, 9, 10, 6 und 6, 8, 7) für die Zug- und Druckstufe des Schwingungsdämpfers aufweist, der über eine elektromagnetische Steuerventilanordnung (34) veränderbar ist.

Erfindungsgemäß weist der Bypassdurchlaß (5, 9, 10, 6) der Zugstufe und der Bypassdurchlaß (6, 8,7) der Druckstufe einen durch eine Feder (11, 12) in die Schließlage gespannten Ventilschieber (13, 14) auf, der einen von der Druckdifferenz zwischen den Arbeitsräumen (3, 4) des Schwingungsdämpfers und dem elektromagnetisch einstellbaren Druck einer Vorsteuerkammer (15, 16) abhängigen Querschnitt des Bypassdurchlasses freigibt.

Neben einer stufenlosen Einstellmöglichkeit der Dämpfungskraft weist der Schwingungsdämpfer den Vorteil einer besseren Reaktionsfähigkeit bei hochfrequenten Anregungen auf.

## Beschreibung

Die Erfindung betrifft einen regelbaren hydraulischen Schwingungsdämpfer für Kraftfahrzeuge mit einem Dämpfungszylinder, einem an einer Kolbenstange befestigten, mit druckabhängige Ventile aufweisenden Drosselquerschnitten versehenen Dämpfungs- kolben, der den Dämpferzylinder in einen ersten und einen zweiten Arbeitsraum unterteilt und mindestens einen Bypass- durchlaß für die Zug- und Druckstufe des Schwingungsdämpfers aufweist, der über eine elektromagnetische Steuerventilan- ordnung veränderbar ist.

Ein derartiger Schwingungsdämpfer ist aus der deutschen Patentanmeldung P 42 16 987 bekannt, wobei die den Bypasskanal steuernde Dämpfungsventileinrichtung aus zwei Dämpfungsventilen besteht, die aus einem elektromagnetisch ansteuerbaren, mit mindestens einem Durchlaß zusammenarbeitenden, axial beweglichen Steuerschieber und mindestens einem mit dem Steuerschieber strömungstechnisch parallel oder in Reihe geschalteten druckabhängigen Ventil besteht. Mit Hilfe dieses Schwingungsdämpfers ist eine stufige Einstellung der Dämpfungskraft in der Zug- und Druckstufe mit jeweils vier Kennlinien zu erreichen.

Aus der Offenlegungsschrift DE 38 35 705 A1 ist ein Schwingungsdämpfer bekannt, bei dem unabhängig von der Kolbengeschwindigkeit die Dämpfungskraft kraftproportional eingestellt werden kann. Dazu weist der Dämpfungskolben ein erstes Einzelventil und ein mit einem Steuerraum versehenes zweites Einzelventil auf, wobei der den Ventilschieber des zweiten Ventils einstellende Druck im Steuerraum über das elektromagnetisch ansteuerbare erste Einzelventil beeinflußbar ist. Neben einer schwierigen Abstimmung der Grunddämpfungskennlinie bei nicht angesteuerten Elektromagneten, kann eine solche Dämpfungskraft erzeugende Ventilanordnung auf hochfrequente Anregung wegen des notwendigen Druckaufbaus in der Steuerkammer nur langsam oder gar nicht reagieren.

Die Aufgabe der Erfindung ist es, eine elektromagnetisch ansteuerbare Ventilanordnung zur kontinuierlichen Einstellung der Dämpfungskraft eines Schwingungsdämpfers zu schaffen, die schnell auf hochfrequente Anregungen reagiert, deren Grunddämpfungskennlinie leicht einstellbar ist und einen einfachen Aufbau aufweist.

Die Aufgabe wird durch die kennzeichnenden Merkmale des Anspruchs 1 gelöst. Die Unteransprüche 2 bis 10 stellen vorteilhafte Ausbildungen dar.

Erfindungsgemäß ist für den Bypaßdurchlaß der Zug- und Druckstufe jeweils ein durch eine Feder in seine Schließlage vorgespannter Ventilschieber vorgesehen. Die Ventilschieber weisen Vorsteuerkammern auf, die über einen Durchlaß im Ventilschieber von der unter dem Druck der Dämpfungsflüssigkeit stehenden Arbeitskammer des Schwingungsdämpfers anströmbar und miteinander über einen Strömungskanal verbindbar sind, dessen Durchlaßquerschnitt mittels eines über eine Elektromagnetanordnung steuerbaren Steuerschieber einstellbar ist. Der Durchlaß des jeweils nicht von der Dämpfungsflüssigkeit belasteten Ventilschiebers dient nach einem wesentlichen Merkmal der Erfindung zum Abfluß der Dämpfungsflüssigkeit aus der Vorsteuerkammer des von der Dämpfungsflüssigkeit belasteten Ventilschiebers.

Zur Einstellung einer gewünschten Dämpfungskraftkennlinie des Schwingungsdämpfers in Verbindung mit dem die Vorsteuereinheit darstellenden Steuerschieber haben die Durchlässe der Ventilschieber in Zuströmrichtung zur Vorsteuerkammer einen kleineren Querschnitt als in Abströmrichtung.

In einer vorteilhaften Ausbildung wird dieses Merkmal dadurch realisiert, daß die Ventilschieber Rückschlagventile aufweisen, die in Zuströmrichtung der Dämpfungsflüssigkeit von einer der Arbeitskammern die Durchlässe der Ventilschieber teilweise verschließen.

In einer weiteren vorteilhaften Ausbildung der Steuerventilanordnung verschließt der Steuerschieber bei nicht angesteuerter Elektromagnetanordnung den Strömungskanal zwischen den Vorsteuerkammern der Zug- und Druckstufe, um bei einem Ausfall der Elektromagnetanordnung zu gewährleisten, daß der Bypassdurchlaß geschlossen ist und die Dämpfungskraft nur noch von den druckabhängigen Drosseldurchlässen des Dämpfungskolbens aufgebaut wird.

Die erfindungsgemäße Steuerventilanordnung kann dabei oberhalb des Dämpfungskolbens im Dämpferzylinder angeordnet werden, ist aber auch als separates Bauteil außerhalb des Dämpferzylinders mit wenigstens einer Strömungsverbindung zwischen den Arbeitsräumen oder einen Arbeitsraum und einem Ausgleichsraum einsetzbar.

Wird die Steuerventilanordnung für eine Niveauregelung eines Schwingungsdämpfers eingesetzt, verbindet die Steuerventilanordnung einen der Arbeitsräume des Dämpferzylinders mit einem externen Druckspeicher.

Der erfindungsgemäße Schwingungsdämpfer weist neben einer stufenlosen Einstellmöglichkeit der Dämpfungskraft den Vorteil einer besseren Reaktionsfähigkeit bei hochfrequenten Anregungen durch die Anordnung als Bypassventil und die nicht benötigten Rückschlagventile in den Strömungswegen zur bzw. vor der Steuerventilanordnung auf.

Die vom Elektromagneten aufzubringenden Kräfte sind relativ gering, da dieser nur die Schließkraft des Steuerschiebers beeinflußt, welcher über die Einstellung der an den Ventilschiebern anliegenden Druckdifferenz das eigentliche Bypassventil steuert.

Nachfolgend wird die Erfindung annhand von Ausführungsbeispielen näher beschrieben. Die zugehörigen Zeichnungen zeigen:
- Fig. 1: eine schematische Darstellung eines Einrohrschwingungsdämpfers,
- Fig. 2: eine Steuerventilanordnung für einen Einsatz im Dämferzylinder,
- Fig. 3: eine Steuerventileinrichtung mit unterschiedlichen Durchlässen in den Ventilschiebern in Zu- und Abströmrichtung,
- Fig. 4: eine Ausführung der Ventilschieber und
- Fig. 5: eine Steuerventilanordnung für einen Einsatz als,, separates Bauteil außerhalb des Schwingungsdämpfers.

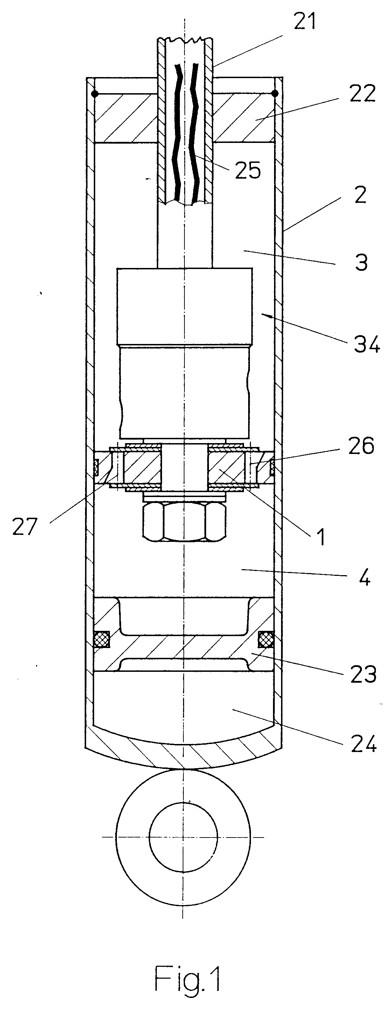

Der in Fig. 1 dargestellte regelbare hydraulische Einrohrschwingungsdämpfer besteht im wesentlichen aus einem Dämpferzylinder 2, der durch einen Führungsverschluß 22 verschlossen ist und einen mit der Kolbenstange 21 verbundenen mit druckabhängigen Drosselventilen 26, 27 versehenen Dämpfungskolben 1, der den Dämpferzylinder 2 in zwei Arbeitsräume 3 und 4 unterteilt. Der untere Arbeitsraum 4 ist durch den Trennkolben 23 vom gasgefüllten Ausgleichsraum 24 getrennt, der zur Kompensation des ein- und ausfahrenden Kolbenstangenvolumens dient. Der Dämpfungskolben 1 ist mit einer proportional regelbaren Steuerventilanordnung 34 versehen, deren elektrische Anschlüsse 25 durch die hohle Kolbenstange 21 nach außen geführt sind.

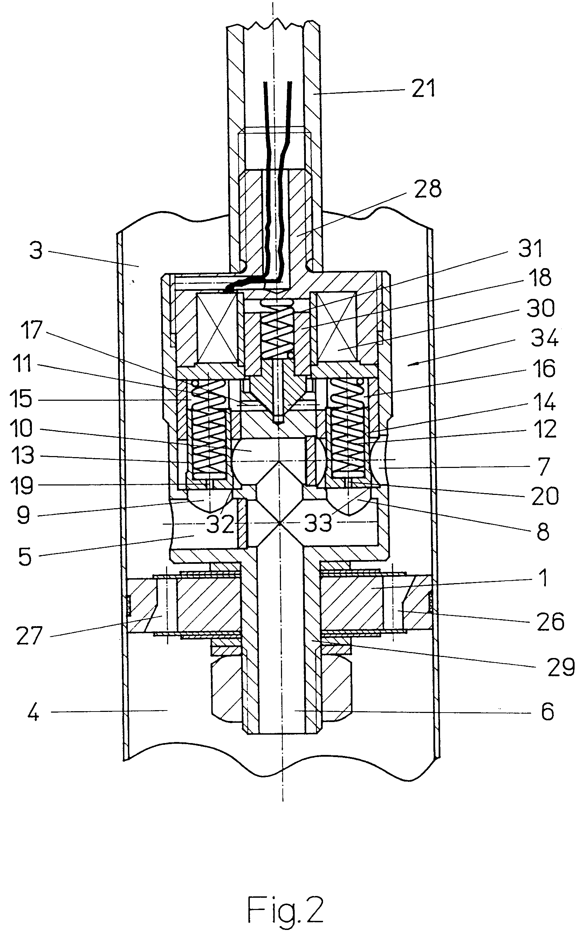

Eine Ausführungsform der erfindungsgemäßen Steuerventilanordnung zeigt Fig. 2. Die zwischen den Dämpfungskolben 1 und der Kolbenstange 21 angeordnete Steuerventilanordnung 34 befindet sich in einem Ventilgehäuse 28, das mit einer Kolbenstange 21 über eine Schraubverbindung fest verbunden ist und zur Bildung des Bypasskanals eine zylindrische Hülse 29 aufweist, um die der mit Drosselventilen 26,37 ausgestattete Dämpfungskolben 1 angeordnet ist. Zur Steuerung des Bypasskanals 5,9,10,6 der Zugstufe weist die Steuerventilanordnung 34 einen hülsenförmigen Ventilschieber 13 und für den Bypasskanal 6,8,7 der Druckstufe einen hülsenförmigen Ventilschieber 14 auf, die über Federn 11 und 12 in ihre Schließlage gespannt sind. Oberhalb der Ventilschieber 13 und 14 befindet sich im Ventilgehäuse 28 die Elektromagnetanordnung mit einer Spule 30 und dem als Anker ausgebildeten Steuerschieber 18, der bei nicht angesteuerter Spule 30 über eine Feder 31 in seine Schließlage gespannt ist.

Die zur Ausbildung der dem Druck der Dämpfungsflüssigkeit der jeweiligen Arbeitskammer 3 oder 4 entgegenstehenden steuerbaren Kraft notwendigen Vorsteuerkammern 15 und 16 werden durch die hohlen Ventilschieber 13, 14 gebildet und sind über den Strömungskanal 17 miteinander verbunden, dessen Querschnitt über den Steuerschieber 18 eingestellt wird.

In der Zugstufe des Schwingungsdämpfers gelangt die Dämpfungsflüssigkeit über das druckabhängige Drosselventil 26 in dem unteren Arbeitsraum 4, gleichzeitig steht sie jedoch auch über den Durchlaß 5 an der Stirnfläche des Ventilschie-bers 13. Durch den Durchlaß 19 fließt Dämpfungsflüssigkeit in die Vorsteuerkammer 15, in der sich bei nicht angesteuerter Spule 30 ein Druck gleich dem Druck in der Arbeitskammer 3 aufbaut. Der Ventilschieber 13 wird durch die Kraft der Feder 11 auf den Ventilsitz 32 gedrückt. Gibt der Steuerschieber 18 jedoch den Strömungskanal 17 ganz oder teilweise frei, fließt Dämpfungsflüssigkeit über den Durchlaß 20 des nicht druckbelasteten Ventilschiebers 14 und die Durchlässe 8 und 6 ab, die durch den Druck der Dämpfungsflüssigkeit in der Arbeitskammer 3 erzeugte Kraft kann die Kraft der Feder 11 überwinden und der Ventilschieber 13 hebt in Abhängigkeit des freigegebenen Querschnitts des Strömungskanals 17 und damit in Abhängigkeit des Druckes in der Vorsteuerkammer 15 mehr oder weniger von seinem Ventilsitz 32 ab und gibt den Bypassdurchlaß 5,9,10,6 der Zugstufe frei.

In der Druckstufe gelangt die Dämpfungsflüssigkeit von dem unter Druck stehenden Arbeitsraum 4 über die Durchlässe 6 und 8 an der Stirnfläche des Ventilschiebers 14 und fließt über den Durchlaß 20 in die Vorsteuerkammer 16, in der bei geschlossenem Strömungskanal 17 ein Druck gleich dem Druck im Arbeitsraum 4 aufgebaut wird. Wird die Spule 30 angesteuert, gibt der Steuerschieber 18 den Strömungskanal 17 mehr oder weniger frei und die Dämpfungsflüssigkeit strömt aus der Druckkammer 16 in die nicht unter Druck stehende Druckkammer 15 und durch den Durchlaß 20 in den Arbeitsraum 3. Der Druck in der Vorsteuerkammer 16 wird geringer als im Arbeitsraum 4, der Ventilschieber 14 hebt gegen die Kraft der Feder 12 vom Ventilsitz 33 ab und gibt den Bypassdurchlaß 6,8,7 ganz oder teilweise frei.

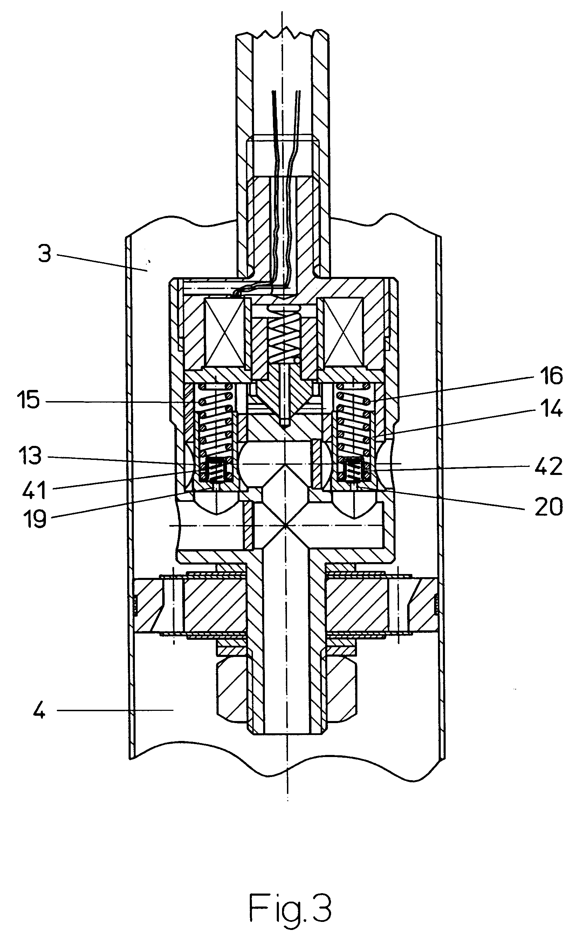

Zur genauen Einstellung einer gewünschten Dämpfungskraftkennlinie des Schwingungsdämpfers kann es von Vorteil sein, die Durchlässe 19,20 der Ventilschieber 13,14 so auszubilden, daß sie in Zuströmrichtung der Dämpfungsfüssigkeit aus einer der Arbeitskammern 3 oder 4 einen kleineren Durchlaßquerschnitt als in Abströmrichtung aus der Vorsteuerkammer 16 oder 15 aufweisen. Zur Realisierung der unterschied-lichen Durchlaßquerschnitte weisen die Ventilschieber 13, 14 jeweils wie in Fig. 3 dargestellt, ein Rückschlagventil 41,42 auf, die in Zuströmrichtung die Durchlässe 19, 20 teilweise verschließen.

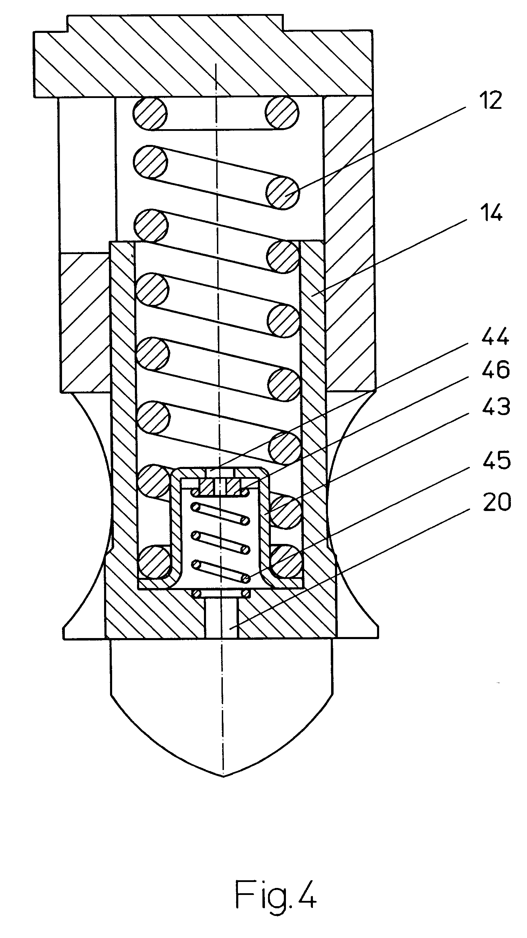

In Fig. 4 ist eine Ausführungsform der Rückschlagventile anhand des Ventilschiebers 14 gezeigt. Der Durchlaß 20 des becherförmig ausgebildeten, durch eine Feder 12 vorgespannten Ventilschiebers 14 wird durch eine im Ventilschieber durch die Feder 12 gehaltene Hülse 43 mit einem Durchlaß 44 abgedeckt. Innerhalb der Hülse 43 ist eine den Durchlaß 44 teilweise abdeckende, in Zuströmrichtung durch die Feder 45 vorgespannte Scheibe 46 angeordnet. Durch eine unterschiedliche Auslegung der verschiedenen Durchlässe in den Ventilschiebern kann in Verbindung mit der Auslegung der Vorsteuereinheit (Steuerschieber 18) die gewünschte Dämpfungskennlinie erzeugt werden.

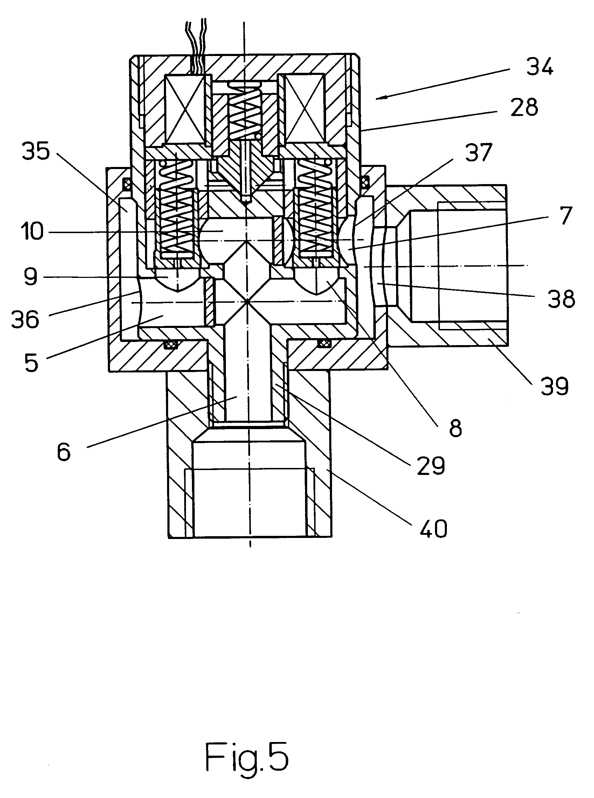

Fig. 5 zeigt die Steuerventilanordnung 34 als separates Bauteil, bei dem um das Ventilgehäuse 28 ein nach außen abgedichteter Ringraum 35 derart angeordnet ist, daß die Einströmöffnung 36 des Bypasskanals 5,9,10,6 und die Ausströmöffnung 37 des Bypasskanals 6,8,7 in den Ringraum münden. Der Ringraum 35 wiederum weist eine Öffnung 38 auf, die mit einem Anschlußteil 39 für die Strömungsverbindung mit einem der Arbeitsräume des Schwingungsdämpfers korrespondiert. Zur Verbindung mit dem anderen Arbeitsraum des Schwingungsdämpfers ist ein weiteres Anschlußteil 40 mit der zylindrischen Hülse 29 verbunden.

Bei der Verwendung der Steuerventilanordnung für einen Zweirohrschwingungsdämpfer ist es vorteilhaft, eines der Anschlußteile 39,40 über eine Strömungsverbindung mit dem oberhalb des Kolbens liegenden Arbeitsraum und das andere Anschlußteil 40, 39 mit dem Ausgleichsraum des Schwingungsdämpfers zu verbinden.

### Regelbarer hydraulischer Schwingungsdämpfer

- 1.: Dämpfungskolben
- 2.: Dämpferzylinder
- 3.: Arbeitsraum
- 4.: Arbeitsraum
- 5.: Durchlaß
- 6.: Durchlaß
- 7.: Durchlaß
- 8: Durchlaß
- 9: Druchlaß
- 10.: Durchlaß
- 11.: Feder
- 12.: Feder
- 13.: Ventilschieber
- 14.: Ventilschieber
- 15.: Vorsteuerkammer
- 16.: Vorsteuerkammer
- 17.: Strömungskanal
- 18.: Steuerschieber
- 19.: Durchlaß
- 20.: Durchlaß
- 21.: Kolbenstange
- 22.: Führungsverschluß
- 23.: Trennkolben
- 24.: Ausgleichsraum
- 25.: elektrische Anschlüsse
- 26.: druckabhängiges Drosselventil
- 27.: druckabhängiges Drosselventil
- 28.: Ventilgehäuse
- 29.: Hülse
- 30.: Spule
- 31.: Feder
- 32.: Ventilsitz
- 33.: Ventilsitz
- 34.: Steuerventilanordnung
- 35.: Ringraum
- 36.: Einströmöffnung
- 37.: Ausströmöffnung
- 38.: Öffnung
- 39.: Anschlußteil
- 40.: Anschlußteil
- 41.: Rückschlagventil
- 42.: Rückschlagventil
- 43.: Hülse
- 44.: Durchlaß
- 45.: Feder
- 46.: Scheibe

## Patentansprüche

1. Regelbarer hydraulischer Schwingungsdämpfer für Kraftfahrzeuge mit einem Dämpferzylinder (2), einem an einer Kolbenstange (21) befestigten, mit druckabhängige Ventile (26,27) aufweisenden Drosselquerschnitten versehenen Dämpfungskolben (1), der den Dämpferzylinder (2) in einen ersten und einen zweiten Arbeitsraum (3,4) unterteilt, und mindestens einen Bypaßdurchlaß für die Druck- und Zugstufe des Schwingungsdämfers, der über eine elektromagnetische Steuerventilanordnung (34) veränderbar ist, dadurch gekennzeichnet, daß für jeden Bypaßdurchlaß (5,9,10,6 und 6,8,7) ein durch eine Feder (11,12) in seine Schließlage vorgespannter Ventilschieber (13,14) vorgesehen ist, wobei die Ventilschieber (13,14) Vorsteuerkammern (15,16) aufweisen, die über einen Durchlaß (19,20) im Ventilschieber (13,14) von der unter dem Druck der Dämpfungsflüssigkeit stehenden Arbeitskammer (3,4) anströmbar und miteinander über einen Strömungskanal (17) verbindbar sind, dessen Durchlaßquerschnitt mittels eines über eine Elektromagnetanordnung steuerbaren Steuerschieber (18) einstellbar ist, wobei der Durchlaß (19,20) des jeweils nicht von der Dämpfungsflüssigkeit belasteten Ventilschiebers (13,14) zum Abfluß der Dämpfungsflüssigkeit aus der Vorsteuerkammer (15,16) des druckbelasteten Ventilschiebers (13,14) dient.

2. Schwingungsdämpfer nach Anspruch 1, dadurch gekennzeichnet, daß die Durchlässe (19,20) der Ventilschieber (13,14) in Zuströmrichtung zur Vorsteuerkammer (15,16)einen kleineren Querschnitt als in Abströmrichtung aufweisen.

3. Schwingungsdämpfer nach Anspruch 1 oder 2, dadurch gekennzeichnet, daß die Ventilschieber (13,14) Rückschlagventile (41,42) aufweisen, die in Zuströmrichtung zur Vorsteuerkammer (15,16) die Durchlässe (19,20) teilweise verschließen.

4. Schwingungsdämpfer nach einem der Ansprüche 1 bis 3, dadurch gekennzeichnet, daß die Elektromagnetanordnung ein Proportionalmagnet ist.

5. Schwingungsdämpfer nach einem der Ansprüche 1 bis 4, dadurch gekennzeichnet, daß der Steuerschieber (18) als Anker der Elektromagnetanordnung ausgebildet ist.

6. Schwingungsdämpfer nach einem der Ansprüche 1 bis 5, dadurch gekennzeichnet, daß der Steuerschieber (18) bei nicht angesteuerter Elektromagnetanordnung den Strömungskanal (17) verschließt.

7. Schwingungsdämpfer nach einem der Ansprüche 1 bis 6, dadurch gekennzeichnet, daß die Steuerventilanordnung (34) oberhalb des Dämpfungskolbens (1) im Dämpferzylinder (2) angeordnet ist.

8. Schwingungsdämpfer nach einem der Ansprüche 1 bis 6, dadurch gekennzeichnet, daß die Steuerventilanordnung (34) außerhalb des Dämpferzylinders (2) angeordnet ist und über eine Strömungsverbindung mit den Arbeitsräumen (3,4) des Schwingungsdämpfers verbunden ist.

9. Schwingungsdämpfer nach einem der Ansprüche 1 bis 8, dadurch gekennzeichnet, daß die Steuerventilanordnung (34) den Querschnitt eines Bypasskanals steuert, der einen Arbeitsraum (3,4) des Dämpferzylinders (29 mit einem Ausgleichsraum verbindet.

10. Schwingungsdämpfer nach einem der Ansprüche 1 bis 7, dadurch gekennzeichnet, daß die Steuerventilanordnung (34) einen Arbeitsraum (3,4) des Schwingungsdämpfers mit einem externen Speicher für unter erhöhtem Druck stehende Dämpfungsflüssigkeit regelbar verbindet.
